# EUROPEAN PATENT SPECIFICATION

(11) **EP 2 447 967 B1**
(45) Date of publication and mention of the grant of the patent: **23.12.2015**
(21) Application number: 10189525.8
(22) Date of filing: 29.10.2010
(51) Int. Cl.: H01H 3/20, A01D 34/68, A01D 34/82

(54) **Improvements in or relating to electrically-powered garden apparatus**
Verbesserungen an oder im Zusammenhang mit elektrisch angetriebenen Gartengeräten
Améliorations de ou associées à un appareil de jardin à alimentation électrique

(43) Date of publication of application: 02.05.2012
(73) Proprietor: Robert Bosch GmbH, 70442 Stuttgart (DE)
(72) Inventor: Ling, Herr Matthew, Ipswich Suffolk IP6 8QR (GB); Quigley, Herr Andrew, Matlock Derbyshire DE4 4LS (GB); Smith, Herre Andrew, High Peak Derbyshire SK237AN (GB); Taylor, Herr Jon, Attleborough Norfolk NR17 2BT (GB)

(56) References cited:
- EP-A1- 1 589 550
- EP-A1- 2 025 217
- EP-A2- 0 825 627
- US-A- 6 078 015

## Description

The present invention relates to improvements in or relating to electrically-powered garden apparatus. In particular, it relates to apparatus which is moved across the ground by the user, such as lawn-care apparatus including lawn-mowers, lawn-rakes and scarifiers and the switch-cases thereof.

The switch-case of these products includes an electrical switch providing power to a motor, which switch is actuated by means of a switch-actuating mechanism. Typically, the switch-actuating mechanism includes at least one hand-operatable lever and an interlock arrangement to require a two-handed action to initiate energising of the motor.

Different switching assemblies for garden apparatuses are known from documents US6078015, EP1589550 and EP2025217, for example.

Different markets have different cable connectivity design requirements, all of which result in manufacturers having to develop a large range of switch-cases to cover the global market. Battery-powered variants of mains-powered devices add a yet further switch-case design.

The present invention seeks to overcome this problem.

Accordingly, in its broadest sense, the present invention provides a switching assembly for a garden apparatus comprising a mechanical module and an electrical switching module wherein the mechanical and electrical switching modules are demountably couplable between a coupled and a decoupled configuration. The mechanical module comprises at least one user-operable movable member and an output switch actuator associated with the at least one user-operable movable member and movable thereby between a non-operating position and an operating position. The electrical switching module comprises an electrical input, an electrical output and electrical switch having a switch actuator element arranged, in use, to connect electrically the input and the output. The mechanical and electrical switching modules are arranged such that, in the coupled configuration, the output switch actuator, when in the operating configuration, actuates the switch actuator.

The design of the electrical input to the electrical switch module can be selected to suit the requirements of any particular market.

Preferably, the mechanical module comprises two user-operable movable members, both of which movable members must, in use, be moved in order to cause the output switch actuator to move to its operating position.

Suitably, the mechanical module further comprises mounting means by which the module is mountable to a handle of the garden apparatus.

The electrical module is a self-contained unit adapted to provide mechanical protection to electrical elements of the module when in the decoupled configuration.

The electrical module has an outer casing which, in the coupled configuration, forms a part of an outer casing for the coupled assembly.

The mechanical module has an outer casing which, in the coupled configuration, combines with the electrical module outer casing to form a substantially sealed electrical compartment.

The above and other aspects of the present invention will now be described in further detail, by way of example only, with reference to the accompanying figures, in which:
Figure 1 is a rear exploded perspective view of an embodiment of a switching assembly in accordance with the present invention;

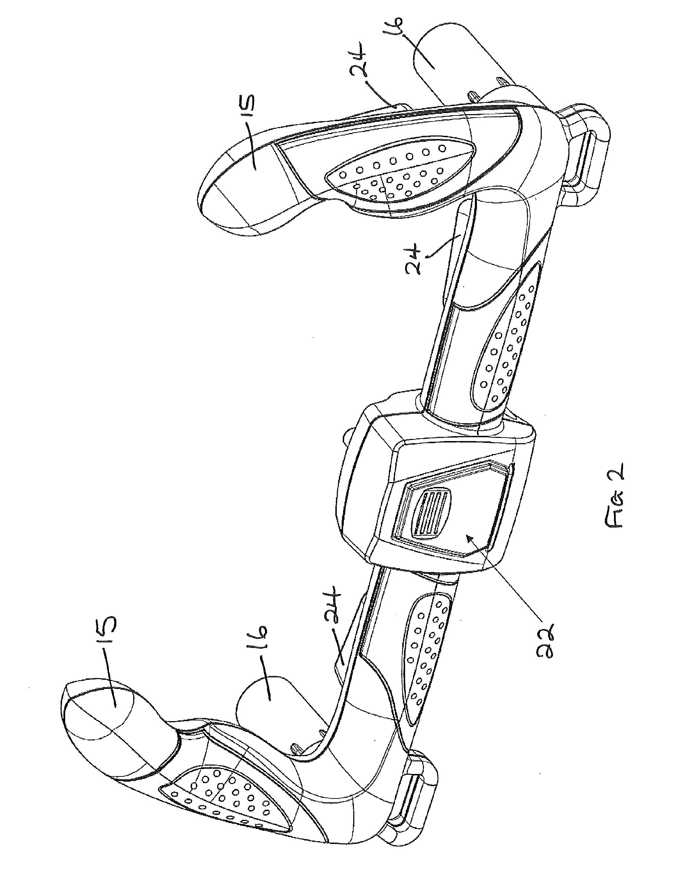

Figure 2 is a front perspective view of the mechanical module of the assembly of Figure 1;
Figure 3 is a perspective view of the assembly of user-operable movable members of the mechanical module of Figure 1 in a non-operative configuration;
Figure 4 is a perspective view of the assembly of user-operable movable members of the mechanical module of Figure 1 in an operative configuration;
Figure 5 is a perspective view of the components of the first movable member of the embodiment of Figure 1;
Figure 6 is a cross-sectional plan view of the electrical switching module of the embodiment of Figure 1;
Figure 7 is a cross-sectional plan view of the mechanical module of the embodiment of Figure 1;
Figure 8 is a cross-sectional plan view of the mechanical and electrical switching modules of the embodiment of Figure 1 in the coupled configuration;
Figures 9 to 11 are cross-sectional side views of the assembly of Figure 8 in a series of configurations from a non-operative configuration to an operative configuration; and
Figure 12 is a further cross-sectional side view of the assembly of Figure 8 in a further non-operative configuration.

Referring to the figures, there is shown an embodiment of a switching assembly 10 in accordance with the present invention formed of a mechanical module 11 and an electrical switching module 12. Electrical switching module 12 is demountably mountable upon mechanical module 11, by means of male coupling members in the form of screw bosses 13 formed on mechanical module 11 which are received in female coupling bores (obscured) in electrical switching module 12 and the two modules secured together with screws 14.

Mechanical module 11 includes hand grips 15 and mounting sockets 16 for receipt, in an assembled product, of a handle frame (not shown). Mechanical module 11 further includes pivotally-mounted, operatively left and right, first movable members in the form of levers 20,21 having associated actuating elements 24 depressed, in use, by the user. The module further comprises a second movable member in the form of a press button 22, centrally positioned within the module. Button 22 provides a safety feature to comply with safety standards requiring two-handed operation to energise the motor of a garden product in order to ensure that, for example in the case of a lawnmower, the user cannot activate the motor with a hand in the vicinity of the cutting blade. In the embodiment shown, the levers 20,21 are arranged to pivot about an operatively substantially vertical pivot axis 23 adjacent the centre of the mechanical module, whereas button 22 is arranged to pivot about a generally horizontal axis.

Mechanical module 11 includes an output switch actuator blade 25 which, in use and as will be described below, engages and actuates the electrical switch of the apparatus, to energise and operate the motor.

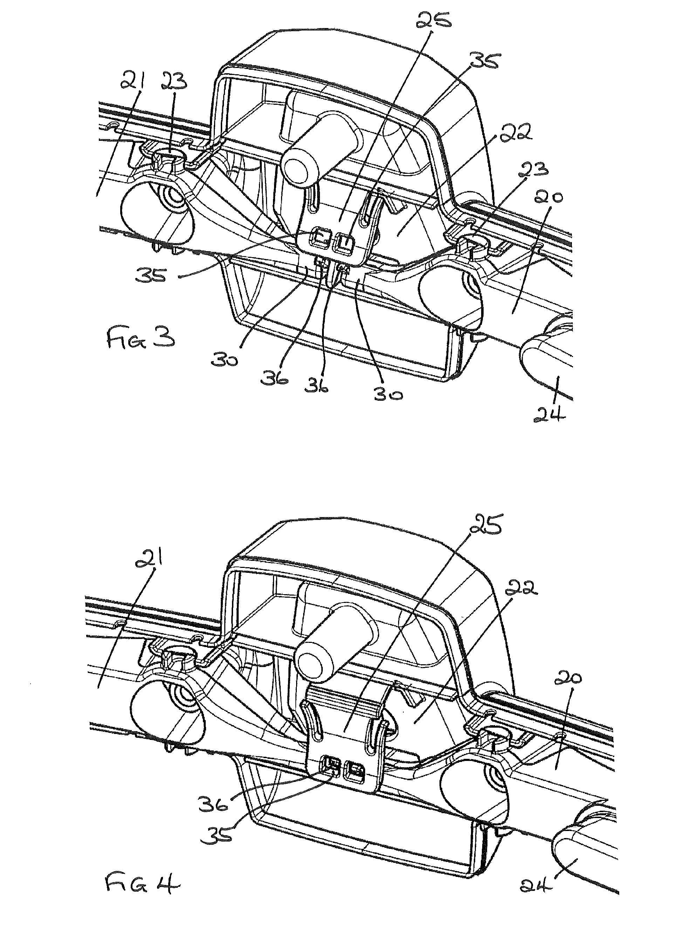

As is most clearly shown in Figures 3 and 4, in the embodiment shown, each of the left and right levers 20,21 are both orientated towards the central-positioned second movable member, such that actuator element 24 is positioned on a distal side of axis 23. Each lever 20,21 comprises a lever element 30 proximally of pivot axis 23. In the embodiment shown, output switch actuator blade 25 is formed with button 22, the two components being formed from a single moulding and having a degree of flexibility provided between the two components to allow flexing of the blade 25 with respect to button 22 in use as will be described below.

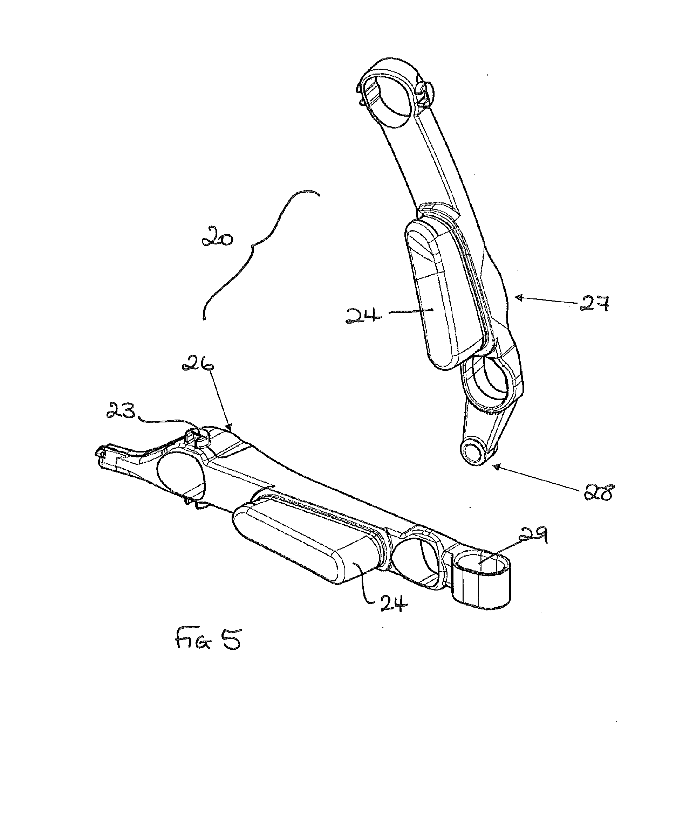

With particular reference to Figure 5, in the embodiment of the mechanical module shown, levers 20,21 each comprise an operatively generally horizontal element 26 and an operatively generally upright element 27, pivotally mounted at an upper end thereof. Elements 26 and 27 are operatively coupled by means of a ball 28 and socket 29 type joint such that movement of upright element 27 in a direction towards the user causes the proximal end of horizontal element 26 to move correspondingly towards the user. Accordingly, each of the levers 20,21 can be actuated by the user with their hands in either the vertical or horizontal positions, as they find most personally comfortable.

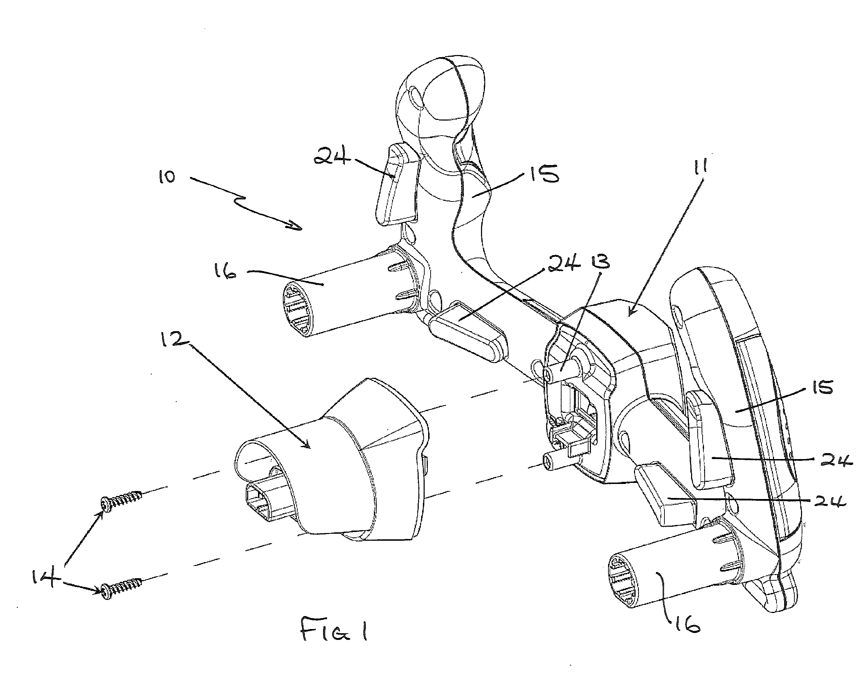

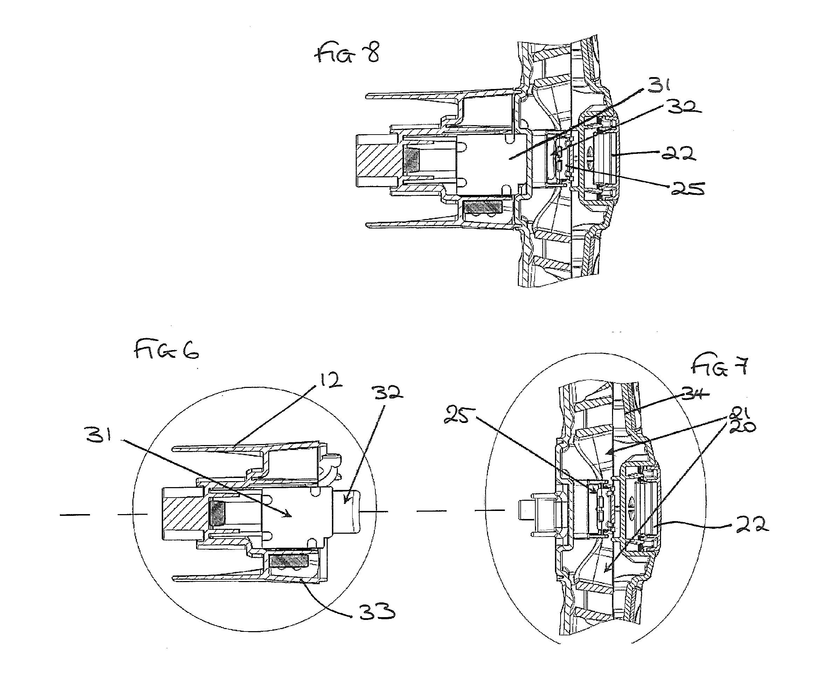

Figure 6 is a cross-sectional view of the electrical switching module of the embodiment of Figure 1. The module comprises an electrical switch 31 having a switch actuator 32. The module also includes an electrical switching module housing 33, suitably, an injection-moulded plastics product. Housing 33 encases and provides mechanical protection to the electrical components contained within it, even when the module is not assembled to the mechanical module. When assembled to the mechanical module, the housing of the mechanical module interfaces to complete a substantially sealed electrical compartment and the electrica switch module housing forms a part of the outer casing of the assembled unit.

Electrical switch 31 is preferably of the push-to-make type in which the switching mechanism is biased into an open circuit position, such that power to the motor is supplied only when the switching mechanism is actuated.

Figure 7 is a part cross-sectional view of the mechanical module of the embodiment of Figure 1, showing button 22 and associated output switch actuator blade 25, together with left and right levers 20,21, within a mechanical module housing 34.

Figure 8 is a part cross-sectional view showing the mechanical and electrical switching modules combined, in the non-energising configuration with actuator blade 25 adjacent switch actuator 32, but not depressing it.

Button 22 is arranged such that it must be depressed before first movable members are depressed in order to cause blade 25 to actuate the electrical switch (the configuration shown in Figure 4). If only the second movable member or only either or both of the levers are depressed, the output switch actuator blade 25 is insufficiently moved towards the electrical switch.

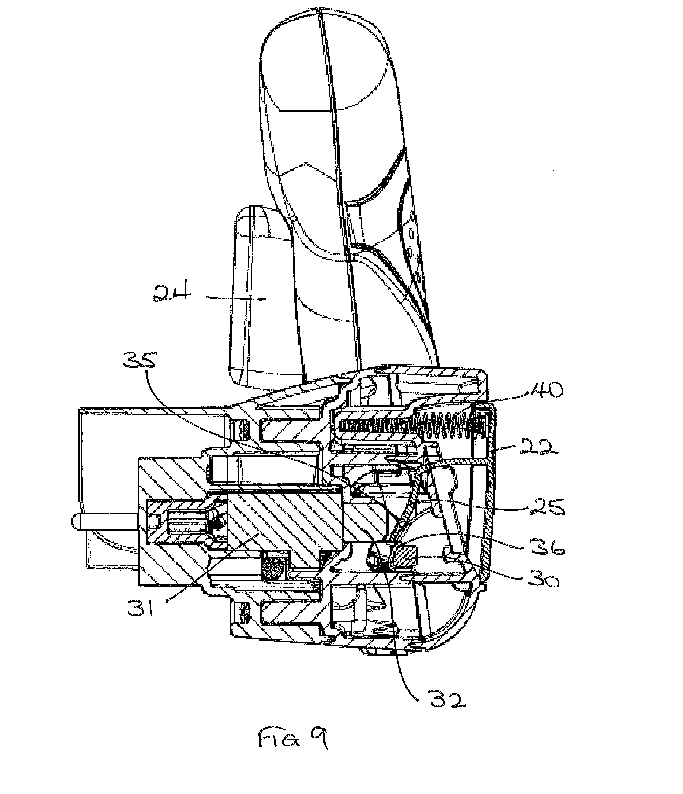

This sequence is illustrated further in Figures 9 to 11. In Figure 9, the assembly is in the rest position. It will be observed that button 22 is biased into the non-operative position shown by means of a spring 40. Output switch actuator blade 25 is positioned adjacent, but spaced from, switch actuator 32.

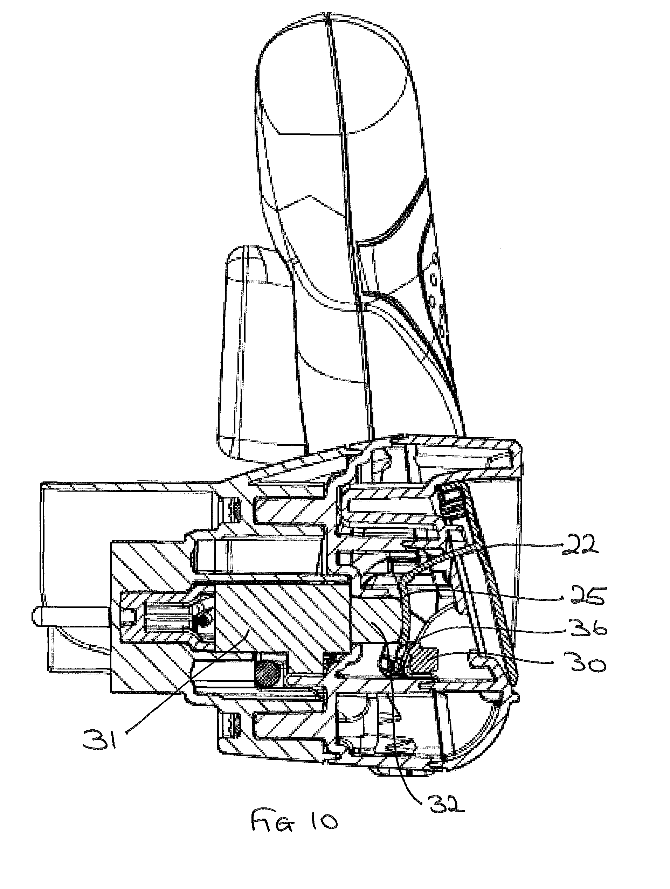

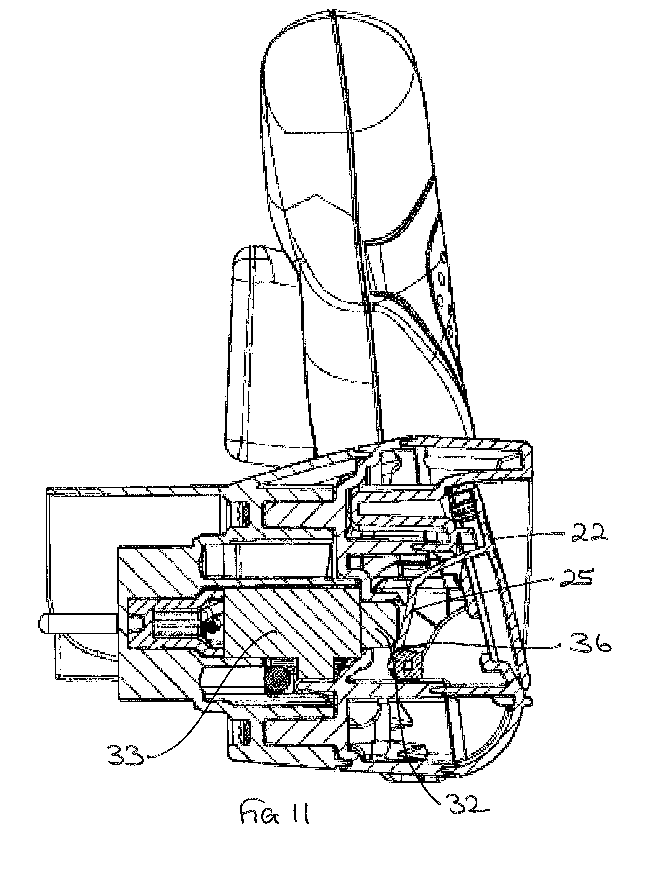

In Figure 10, button 22 has been depressed, moving output switch actuator blade 25 into contact with switch actuator 32, but applying no pressure thereto, or insufficient pressure to cause switch actuator 32 to move into its operative position. In Figure 11, button 22 remains depressed, and lever 20 has been moved into its operative position, thereby deflecting lever element 30 to bear against output switch actuator blade 25, causing it to flex and bear against and depress switch actuator 32 causing current to flow in the circuit to the motor.

As shown in Figures 3, 4 and 10, actuator blade 25 includes a pair of apertures 35. Each of the levers 20,21 includes a projection 36 positioned and dimensioned to be received in and retained by a respective aperture 35. This arrangement causes a projection 36 to latch into its respective aperture 35 so that button 22 can, in use, be released by the user, without causing button 22 to return, by virtue of biasing spring 40 to the rest position, thereby stopping the motor. The motor is thereby retained in a running/switched-on state by the actuation of a single lever 24. The twin projection latch construction also permits the user to actuate the second lever, so engaging the second projection, and maintaining the switched-on state even if the first lever is released. This transfer between levers is assisted by a lead angle on the retaining face of the projection to ensure engagement with the second lever even if the first is inadvertently partially released. Other retaining arrangements will be apparent to the skilled person.

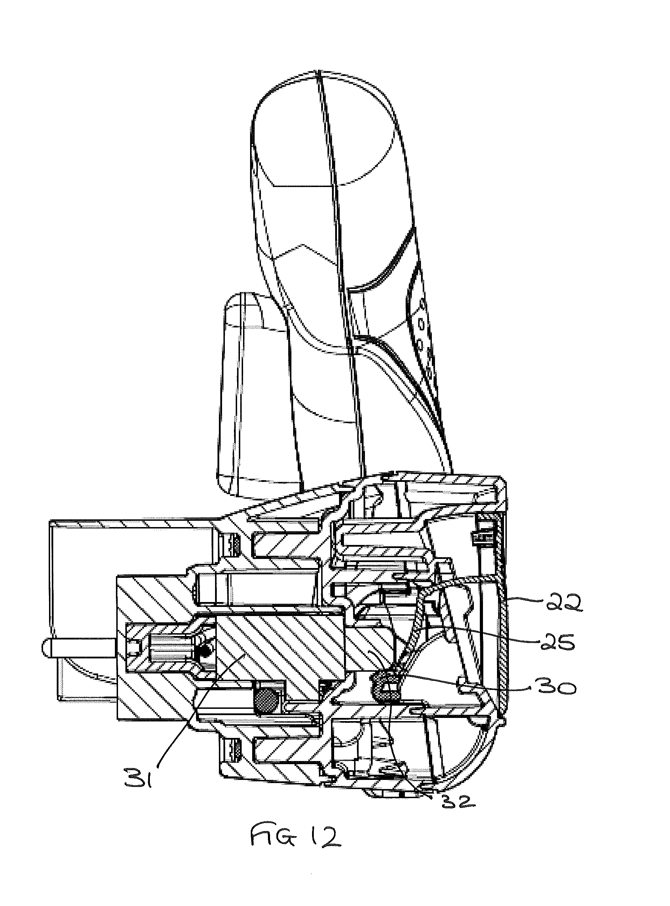

Figure 12 shows a configuration of the illustrated embodiment in which levers 20,21 have been moved to their operative configuration without button 22 first being depressed. As can be seen, lever element 30 is dimensioned such that it passes underneath switch actuator 32 in this configuration, without moving it into its operative position, and then acts as a block against depression of button 22, thereby providing an obvious alert to the user of the product.

The precise arrangement of the first and second movable members illustrated and described and how they link to the output switch actuator blade 25 can be varied according to the requirements of the skilled person. The present invention is equally applicable to adaptation of switching assemblies of existing products.

## Claims

1. A switching assembly (10) for a garden apparatus comprising a mechanical module (11) and an electrical switching module (12) wherein the mechanical module (11) and the electrical switching modules (12) are demountably couplable between a coupled and a decoupled configuration; wherein the mechanical module (11) comprises at least a housing, one user-operable movable member (20, 21, 22, 24) and an output switch actuator (25) associated with the at least one user-operable movable member (20, 21, 22, 24) and movable thereby between a non-operating position and an operating position; wherein the electrical switching module (12) comprises an electrical switching module housing (33), an electrical input, an electrical output and an electrical switch (31) having a switch actuator element (32) arranged, in use, to connect electrically the input and the output; and wherein the mechanical module (11) and the electrical switching modules (12) are arranged such that, in the coupled configuration, the output switch actuator (25), when in the operating configuration, actuates the switch actuator (32), **characterized in that** the electrical switching module housing (33) encases and provides mechanical protection to the electrical components contained within it, even when the electrical switch module (12) is not coupled to the mechanical module (11) and, when coupled to the mechanical module (11), the housing of the Mechanical module (11) interfaces to complete a substantially sealed electrical compartment and the electrical switch module housing (33) forms a part of an outer casing of the coupled assembly.

2. A switching assembly (12) as claimed in Claim 1, **characterized in that** the mechanical module (11) comprises two user-operable movable members (20, 21, 22, 24), both of which movable members (20, 21, 22, 24) must, in use, be moved in order to cause the output switch actuator (25) to move to its operating position.

## Patentansprüche

1. Schaltanordnung (10) für eine Gartenvorrichtung, die ein mechanisches Modul (11) und ein elektrisches Schaltmodul (12) umfasst, wobei das mechanische Modul (11) und das elektrische Schaltmodul (12) zwischen einer gekoppelten und einer entkoppelten Konfiguration lösbar gekoppelt werden können; wobei das mechanische Modul (11) wenigstens ein Gehäuse, ein von einem Anwender betätigbares bewegliches Element (20, 21, 22, 24) und einen Ausgangsschaltaktor (25), der dem wenigstens einen von einem Anwender betätigbaren beweglichen Element (20, 21, 22, 24) zugeordnet ist und hierdurch zwischen einer Nichtbetriebsposition und einer Betriebsposition beweglich ist, umfasst; wobei das elektrische Schaltmodul (12) ein Gehäuse (33) des elektrischen Schaltmoduls, einen elektrischen Eingang, einen elektrischen Ausgang und einen elektrischen Schalter (31) mit einem Schaltaktorelement (32), das bei Verwendung dafür ausgelegt ist, den Eingang und den Ausgang elektrisch zu verbinden, umfasst; und wobei das mechanische Modul (11) und das elektrische Schaltmodul (12) in der Weise angeordnet sind, dass in der gekoppelten Konfiguration der Ausgangsschaltaktor (25) dann, wenn er in der Betriebsposition ist, den Schaltaktor (32) betätigt, **dadurch gekennzeichnet, dass** das Gehäuse (33) für das elektrische Schaltmodul elektrische Komponenten, die darin enthalten sind, umgibt und hierfür einen mechanischen Schutz bereitstellt, selbst wenn das elektrische Schaltmodul (12) nicht mit dem mechanischen Modul (11) gekoppelt ist, und das Gehäuse des mechanischen Moduls (11) dann, wenn es mit dem mechanischen Modul (11) gekoppelt ist, eine Grenzfläche bildet, um einen im Wesentlichen verschlossenen elektrischen Raum zu vervollständigen, und das Gehäuse (33) des elektrischen Schaltmoduls einen Teil eines äußeren Gehäuses der gekoppelten Anordnung bildet.

2. Schaltanordnung (10) nach Anspruch 1, **dadurch gekennzeichnet, dass** das mechanische Modul (11) zwei von einem Anwender betätigbare bewegliche Elemente (20, 21, 22, 24) umfasst, wobei beide beweglichen Elemente (20, 21, 22, 24) bei Verwendung bewegt werden müssen, um zu bewirken, dass sich der Ausgangsschaltaktor (25) in seine Betriebsposition bewegt.

## Revendications

1. Ensemble de commutation (10) pour un appareil de jardin, comprenant un module mécanique (11) et un module de commutation électrique (12), le module mécanique (11) et le module de commutation électrique (12) pouvant être accouplés de manière démontable entre une configuration accouplée et une configuration désaccouplée ; le module mécanique (11) comprenant au moins un boîtier, un organe déplaçable (20, 21, 22, 24) commandable par l'utilisateur et un actionneur de commutateur de sortie (25) associé à l'au moins un organe déplaçable (20, 21, 22, 24) commandable par l'utilisateur et déplaçable par celui-ci entre une position non fonctionnelle et une position fonctionnelle ; le module de commutation électrique (12) comprenant un boîtier de module de commutation électrique (33), une entrée électrique, une sortie électrique et un commutateur électrique (31) ayant un élément d'actionneur de commutateur (32) disposé, pendant l'utilisation, de manière à connecter électriquement l'entrée et la sortie ; et le module mécanique (11) et le module de commutation électrique (12) étant disposés de telle sorte que, dans la configuration accouplée, l'actionneur de commutateur de sortie (25), lorsqu'il est dans la position fonctionnelle, actionne l'actionneur de commutateur (32), **caractérisé en ce que** le boîtier de module de commutation électrique (33) renferme et protège mécaniquement les composants électriques contenus à l'intérieur de celui-ci, même lorsque le module de commutation électrique (12) n'est pas accouplé au module mécanique (11) et, lorsqu'il est accouplé au module mécanique (11), le boîtier du module mécanique (11) réalisant une interface pour compléter un compartiment électrique sensiblement scellé et le boîtier de module de commutateur électrique (33) faisant partie d'une enceinte extérieure de l'ensemble accouplé.

2. Ensemble de commutation (10) selon la revendication 1, **caractérisé en ce que** le module mécanique (11) comprend deux organes déplaçables (20, 21, 22, 24) commandables par l'utilisateur, les deux organes déplaçables (20, 21, 22, 24) devant, pendant l'utilisation, être déplacés afin de permettre à l'actionneur de commutateur de sortie (25) de se déplacer dans sa position fonctionnelle.
